# EUROPEAN PATENT SPECIFICATION

(11) **EP 3 399 468 B1**
(45) Date of publication and mention of the grant of the patent: **04.05.2022**
(21) Application number: 16906929.1
(22) Date of filing: 12.08.2016
(51) Int. Cl.: G06K 19/06, G06K 7/00

(54) **METHOD FOR QUANTITATIVE DEFACING OF A QR CODE**
VERFAHREN ZUM QUANTITATIVEN DEFACING EINES QR-CODES
PROCÉDÉ DE DEGRADATION QUANTITATIF D´UN QR CODE

(30) Priority: 27.06.2016 CN 201610476212
(43) Date of publication of application: 07.11.2018
(73) Proprietor: Fujian Landi Commercial Equipment Co., Ltd, Fuzhou, Fujian 350003 (CN)
(72) Inventor: XIAO, Weijian, Fuzhou Fujian 350000 (CN); LIN, Kui, Fuzhou Fujian 350000 (CN)
(74) Representative: Inal, Aysegul Seda
(86) International application number: PCT/CN2016/094804
(87) International publication number: WO 2018/000532

(56) References cited:
- WO-A1-2016/059822
- CN-A- 1 801 188
- CN-A- 101 908 125
- CN-A- 102 999 772
- CN-A- 105 706 118
- JP-B2- 5 720 623
- US-A1- 2005 138 527
- US-A1- 2014 061 316
- US-A1- 2014 061 316

## Description

### BACKGROUND OF THE INVENTION

### 1. Technical Field

The present invention relates to a method for quantitative defacing of a QR Code.

### 2. Description of Related Art

In the barcode scanning field, sometimes barcodes to be scanned are defaced. Defacing forms include barcode contamination, barcode damage, barcode wrinkling, and fading and fuzzy barcodes. The nature of the defacing forms is damage to white and black modules in the barcode, so that a scanner fails to identify the reflectivity of the current modules and therefore fails to decode the barcode. Whether the scanner can scan the defaced barcode or not is determined by two factors, namely the data correction capability of the barcode and the scanning algorithm of the scanner. At present, there is no systematic method for quantitative evaluation of the defaced barcode scanning capability of a scanner on the market.

On the other hand, the defaced positions of barcodes are random on the market. Scanner manufacturers fail to simulate real defaced patterns. Scanning a lot of defaced barcode samples one by one consumes a lot of labor, and test results are not representative. Therefore, the above problems are the study object of the present invention.

Patent CN 1801188 A discloses a matrix two-dimensional bar code and coding and decoding method, which is characterized by the following: the code graph of bar code is composed of gapless arrangement of n^{∗}m rectangle unit information blocks, wherein m and n is positive integral more than 1; n is different from or the same as m; each rectangle unit information block is composed of different optical characters with two rectangle colorful blocks, wherein n' and m' is positive integral more than 1; n' is different from or the same as m'; each rectangle unit information block contains location ID character and data region; the shape of ID character displays L type or inversed L type along two adjacent edges of rectangle unit information block frame. The bar code contains the following characters: large capacity, high error-correcting rate, high pollution-proof and distortion-proof ability, multiple language editing codes, separating coding and decoding code, random scale adjustment and omnibearing recognizing, which can be applied in multiple domains.

Patent US 2014/061316 A1 discloses a method of disseminating a message, the message is encoding in a barcode A selected region of the barcode is damaged so as to hinder decoding of the message at a scanning device The damaged region of the barcode may be occluded from the scanning device in order to enable the scanning device to read the barcode and the message therein.

Patent US 2005/138527 A1 discloses a two-dimensional, high-density, damage-tolerant printed code suitable for encoding multiple biometrics and text for positive off-line identity verification comprises a horizontal header section a vertical header section a start pattern a left row address pattern an encoded data portion a right two address pattern and stop pattern The horizontal header section encodes the number of bit areas in a transverse row of the encoded data portion and the vertical header section encodes the vertical height of each bit area The start and stop patterns of the code demarcate the lateral extent of the code (ie, the beginning and end) from the adjacent quiet zone Information is encoded into the ended information portion in bit areas that may be printed or blank The information is encoded sequentially in the information portion from the top of the encoded information portion along each transverse row of bit areas to the next row of bit areas until the end of the encoded information portion Error correction is applied to subunits of information from the encoded information portion by dividing the user messages and applying error correction to subunits of the user message The two-dimensional, high-density, damage-tolerant printed code is suitable for printed on a conventionally sized ISO cord or other papers used in verifying identity An ISO-sized cord or other identity paper bearing a two-dimensional, high-density, damage-tolerant printed code encoding multiple biometrics, eg, encoded image likeness and multiple finger print templates, maybe used with an off-line integrated positive identity verification apparatus that is capable of decoding the image and fingerprint samples taken from an individual whose identity is sought to be verified.

Patent WO 2016/059822 A1 discloses a two-dimensional code generating method is characterized in that it includes: obtaining a protection encoding pattern on the basis of a mask pattern reference for specifying a mask pattern to be applied to a module group comprising modules which are unit cells forming a two-dimensional code using the protection encoding pattern to obtain a protection encoding code block by performing protection encoding of a code block comprising at least a data code word generating the module group on the basis of the protection encoding code block and generating a two-dimensional code in which the mask pattern has been applied to the module group The invention also relates to a two-dimensional code reading method corresponding to the two-dimensional code generating method.

### BRIEF SUMMARY OF THE INVENTION

The invention is defined by the set of the appended claims.

The present invention makes improvement aiming at problems in the prior art, which means that the technical problem to be solved by the present invention is to provide a method and system for quantitative defacing of a QR Code, which help solve the problems of failure in quantitative evaluation of defaced barcode scanning performance of a scanner, large labor cost in test, and failure to obtain representative test results.

The present invention makes improvement aiming at problems in the prior art, which means that the technical problem to be solved by the present invention is to provide a method for quantitative defacing of a QR Code, which help solve the problems of how to generate defaced QR codes to evaluate defaced QR scanning capability of scanners.

To solve the above mentioned problems, the present invention employs the following technical solution:
a method for quantitative defacing of a QR Code according to claim 1. Compared with the prior art, the present invention has the following beneficial effects of quantitatively evaluating the scanning performance of defaced barcodes of the scanner, reducing the labor cost during testing, obtaining representative test results, positioning a certain stain with the largest influences on the barcode scanning performance by pertinence, thus improving the scanning performance of the scanner.

### BRIEF DESCRIPTION OF THE SEVERAL VIEWS OF THE DRAWINGS

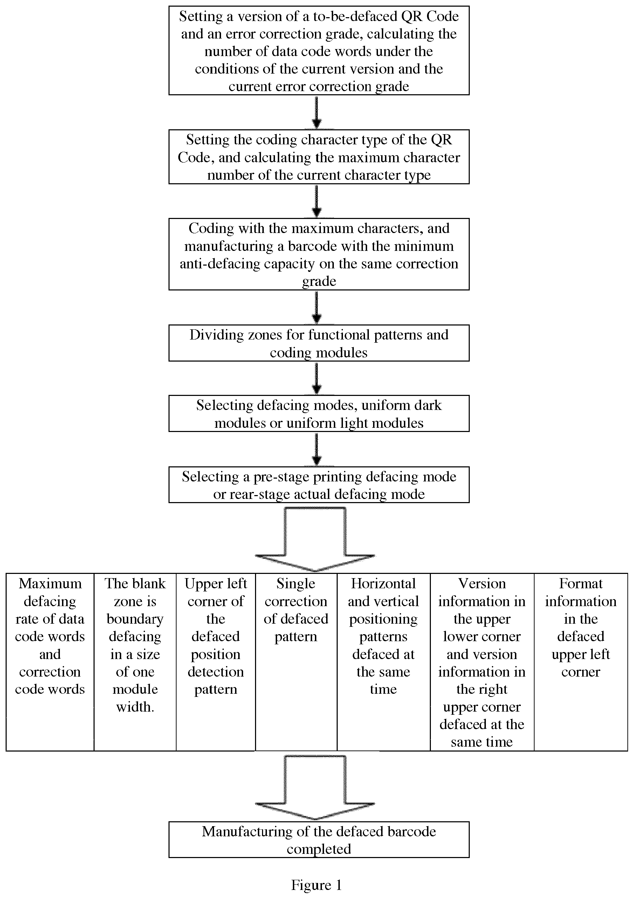

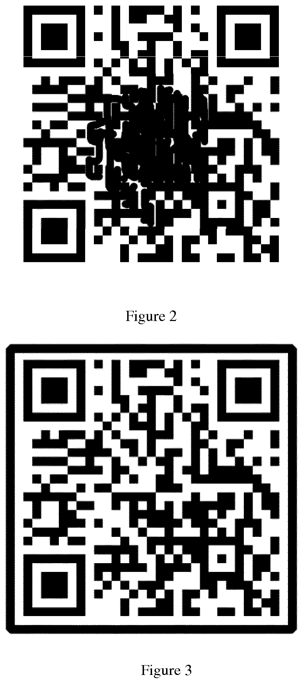

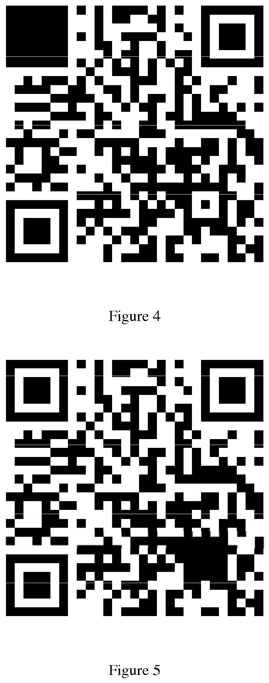

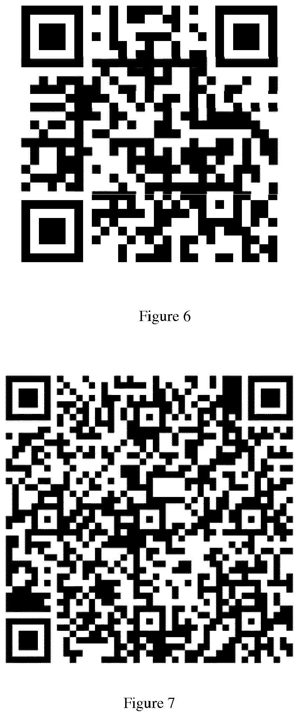

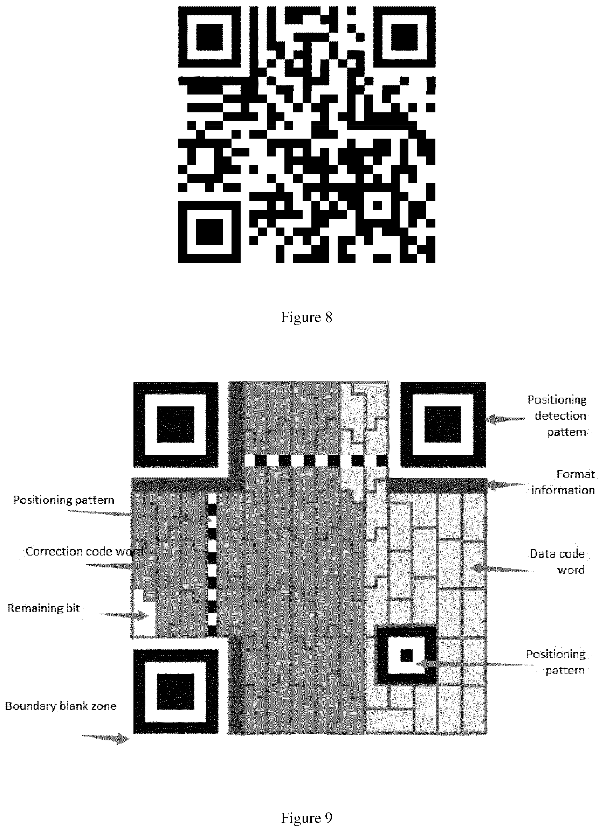

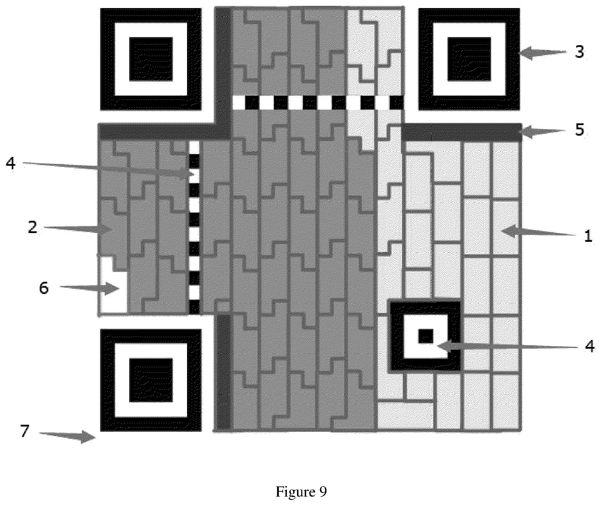

FIG. 1 is an algorithm flowchart; FIG. 2 is a defacing model of data and error correction code words; FIG. 3 is a boundary defacing model; FIG. 4 is a position detection pattern defacing model; FIG. 5 is a correction pattern defacing model; FIG. 6 is a positioning pattern defacing model; FIG. 7 is a version information defacing model ; FIG. 8 is a format information defacing model ; FIG. 9 is a schematic view of zone division of respective modules.

### DETAILED DESCRIPTION OF THE INVENTION

As shown in FIG.1 and FIG. 9, it is provided a method for quantitative defacing of a QR Code, including the following steps:
S1: setting a version of a to-be-defaced QR Code and an error correction grade, calculating the number of data code words and the number of error correction code words of the barcode under the conditions of the current version and the current error correction grade;
S2: setting the coding character type of the to-be-defaced QR Code, calculating the maximum number of characters capable of being coded using the current character type, which means that the number of bits of a data code word, after having added with the digits of a coded pattern indicator and the digits of a character counting indicator, is smaller than the number of the digits of a data code word under the conditions of the current version and correction grade; coding with the maximum number of characters to avoid the existence of filling characters in the data code word;
S3: generating the QR Code under the set conditions, dividing zones for various functional pattern modules and coding zone modules, wherein the modules include a data code word 1 and error correction code word module 2, a barcode boundary module, a position detection pattern module 3, a correction pattern module, a positioning pattern module 4, a version information module, and a format information module 5;
S4: performing quantitative defacing on various modules respectively, wherein the quantitative defacing includes data and error correction code word defacing, boundary defacing, position detection pattern defacing, correction pattern defacing, positioning pattern defacing, version information defacing, and format information defacing.

As shown in FIG.2-8, a method and system for quantitative defacing of a QR Code are provided. Defacing includes data and error correction code word defacing, boundary defacing, position detection pattern defacing, correction pattern defacing, positioning pattern defacing, version information defacing, and format information defacing

## Claims

1. A method for quantitative defacing of a QR Code, **characterized by** comprising the following steps:
S 1: setting a version of a to-be-defaced QR Code and an error correction grade, calculating the number of data code words and the number of error correction code words of the barcode under the conditions of the current version and the current error correction grade;
S2: setting the coding character type of the to-be-defaced QR Code, calculating the maximum number of characters capable of being coded using the current character type, which means that the number of bits of a data code word, after having added with the digits of a coded pattern indicator and the digits of a character counting indicator, is smaller than the number of the digits of a data code word under the conditions of the current version and correction grade; coding with the maximum number of characters to avoid the existence of filling characters in the data code word;
S3: generating the QR Code under the set conditions, dividing zones for various functional pattern modules and coding zone modules, wherein the modules include a data code word (1) and error correction code word module (2), a barcode boundary module, a position detection pattern module (3), a correction pattern module, a positioning pattern module (4), a version information module, and a format information module (5);
S4: performing quantitative defacing on various modules respectively, wherein the quantitative defacing includes data and error correction code word defacing, boundary defacing, position detection pattern defacing, correction pattern defacing, positioning pattern defacing, version information defacing, and format information defacing;
the number of characters used for coding, in patterns including number patterns, letter-number patterns, and 8-byte patterns, is required to be equal to the number of characters corresponding to a data code word which is specified by the current version and correction grade to avoid the situation of adding filling characters;
the coding pattern of the QR Code is analyzed; defacing of the data and error correction code words of the QR Code is quantified; 8 data bits of each one of the data code words and each one of the correction code words are randomly defaced; and when a reading error appears at any one or more of the 8 data bits, it is determined that a substitution error has occurred to the current data code word or error correction code word;
the number of substitution errors of the current QR Code corresponding to the current version and correction grade is queried to ensure that the defacing degree of the data and error correction code words does not exceed the capacity of the QR code for correcting the error code words;
a pre-stage printing defacing option and a rear-stage actual defacing option, wherein the pre-stage printing defacing refers to the operation of defacing a barcode when the barcode with the minimum anti-defacing capacity is manufactured and then printing the defaced barcode; the rear-stage actual defacing refers to the operation of printing a barcode with the minimum anti-defacing capability and then defacing a specific module zone by controlling a doodling pen manually or with a mechanical arm.

2. The method for quantitative defacing of a QR Code according to claim 1, wherein the defacing of the data and error correction code words does not include defacing of the remaining bits (6) of the QR Code.

3. The method for quantitative defacing of a QR Code according to claim 1, wherein the defacing rate of the data and error correction code words of the current QR Code is equal to the product of the defaced code word module/(the number of data correction words + the number of correction code words) ^{∗} 100%.

4. The method for quantitative defacing of a QR Code according to claim 1, wherein barcode boundary blank zones (7) of the barcode boundary module respectively correspond to 0, 1, 2, 3, 4 unit(s) of module widths, and the defacing of the barcode boundary module is divided into a total of 5 grades.

5. The method for quantitative defacing of a QR Code according to claim 1, wherein defacing of the position detection pattern module (3) includes defacing of a single position detection pattern in an upper left corner, defacing of a single position detection pattern in a lower left corner, defacing of a single position defection pattern in an upper right corner, and simultaneous defacing of two or three of the position detection patterns; defacing of the correction pattern module is classified into defacing of a single correction pattern and simultaneous defacing of multiple correction patterns according to the number of correction patterns of the QR Code; defacing of the positioning pattern module (4) is classified into defacing of a vertical positioning pattern, defacing of a horizontal positioning pattern, and simultaneous defacing of two positioning patterns; defacing of the version information module is classified into defacing of version information in a lower left corner, defacing of version information in a lower right corner, and defacing of two pieces of version information; and defacing of the format version module is classified into defacing of format information at a lower left corner and an upper right corner, and defacing of format information at the left upper corner.

6. The method for quantitative defacing of a QR Code according to claim 1, wherein defacing of various modules simulates the actual defacing situations to the maximum extent, and the various modules are defaced in a way of completely contaminating various modules into light modules or dark modules of the barcode.

## Patentansprüche

1. Verfahren zur quantitativen Unkenntlichmachung eines QR-Codes, **gekennzeichnet durch** folgende Schritte:
S1: Einstellen einer Version eines unkenntlich zu machenden QR-Codes und eines Fehlerkorrekturgrads, Berechnen der Anzahl von Datencodewörtern und der Anzahl von Fehlerkorrektur-Codewörtern des Strichcodes unter den Bedingungen der aktuellen Version und des aktuellen Fehlerkorrekturgrads;
S2: Einstellen des Codierungszeichentyps des unkenntlich zu machenden QR-Codes, Berechnen der maximalen Anzahl Zeichen, die unter Verwendung des aktuellen Zeichentyps codiert werden können, was bedeutet, dass die Anzahl Bits eines Datencodeworts nach dem Hinzufügen der Ziffern eines codierten Musterindikators und der Ziffern eines Zeichenzählindikators kleiner als die Anzahl der Ziffern eines Datencodeworts unter den Bedingungen der aktuellen Version und des Korrekturgrads ist; Codieren mit der maximalen Anzahl Zeichen, um das Vorliegen von Füllzeichen im Daten-Codewort zu vermeiden;
S3: Erzeugen des QR-Codes unter den eingestellten Bedingungen, Teilen von Zonen für verschiedene Funktionsmustermodule und Codierungszonenmodule, wobei die Module ein Daten-Codewort (1) und Fehlerkorrektur-Codewortmodul (2), ein Strichcodegrenzenmodul, ein Positionserkennungsmustermodul (3), ein Korrekturmustermodul, ein Positionierungsmustermodul (4), ein Versionsinformationsmodul und ein Formatinformationsmodul (5) beinhalten;
S4: jeweiliges Durchführen quantitativer Unkenntlichmachung an verschiedenen Modulen, wobei die quantitative Unkenntlichmachung Daten- und Fehlerkorrektur-Codewort-Unkenntlichmachung, Grenzenunkenntlichmachung, Positionserkennungsmusterunkenntlichmachung, Korrekturmusterunkenntlichmachung, Positionierungsmusterunkenntlichmachung, Unkenntlichmachung von Versionsinformationen und Unkenntlichmachung von Formatinformationen beinhaltet;
wobei die Anzahl zur Codierung verwendeter Zeichen in Mustern einschließlich Ziffernmustern, Buchstaben-Ziffern-Mustern und 8-Byte-Mustern gleich der Anzahl von Zeichen sein muss, die einem Daten-Codewort entsprechen, das durch die aktuelle Version und den Korrekturgrad vorgegeben wird, um die Situation des Hinzufügens von Füllzeichen zu vermeiden;
wobei das Codierungsmuster des QR-Codes analysiert wird; Unkenntlichmachen der Daten- und Fehlerkorrektur-Codewörter des QR-Codes quantifiziert wird; 8 Datenbits eines jeden Daten-Vodeworts und eines jeden Korrektur-Codeworts zufällig unkenntlich gemacht werden; und wenn ein Lesefehler in einem beliebigen oder mehreren der 8 Datenbits erscheint, bestimmt wird, dass ein Substitutionsfehler am aktuellen Daten-Codewort oder Fehlerkorrektur-Codewort aufgetreten ist;
wobei die Anzahl von Substitutionsfehlern des aktuellen QR-Codes, die der aktuelle Version und dem Korrekturgrad entsprechen, abgefragt wird, um sicherzustellen, dass der Unkenntlichmachungsgrad der Daten- und Fehlerkorrektur-Codewörter die Fähigkeit des QR-Codes zum Korrigieren der fehlerhaften Codewörter nicht übersteigt;
eine Vorstuftendruckunkenntlichmachungsoption und ein tatsächliche Nachstufenunkenntlichmachungsoption, wobei die Vorstufendruckunkenntlichmachung den Vorgang der Unkenntlichmachung eines Strichcodes bezeichnet, wenn der Strichcode mit minimaler Fähigkeit zur Anti-Unkenntlichmachung hergestellt wird und anschließend der unkenntlich gemachte Strichcode gedruckt wird; und die tatsächliche Nachstufenunkenntlichmachung den Vorgang des Druckens eines Strichcodes mit minimaler Fähigkeit zur Anti-Unkenntlichmachung und anschließendes Unkenntlichmachen einer spezifischen Modulzone durch manuelles oder mit einem mechanischen Arm erfolgendes Steuern eines Kritzelstifts bezeichnet.

2. Verfahren zur quantitativen Unkenntlichmachung eines QR-Codes nach Anspruch 1, wobei die Unkenntlichmachung der Daten- und Fehlerkorrektur-Codewörter keine Unkenntlichmachung der übrigen Bits (6) des QR-Codes beinhaltet.

3. Verfahren zur quantitativen Unkenntlichmachung eines QR-Codes nach Anspruch 1, wobei die Unkenntlichmachungsrate der Daten- und Fehlerkorrektur-Codewörter des aktuellen QR-Codes gleich dem Produkt des unkenntlich gemachten Codewortmoduls/(Anzahl Datenkorrekturwörter + Anzahl Korrektur-Codewörter) ^{∗} 100 % ist.

4. Verfahren zur quantitativen Unkenntlichmachung eines QR-Codes nach Anspruch 1, wobei Strichcodegrenzenleerzonen (7) des Strichcodegrenzenmoduls jeweils 0, 1, 2, 3, 4 Einheit(en) von Modulbreiten entsprechen und die Unkenntlichmachung des Strichcodegrenzenmoduls in insgesamt 5 Grade unterteilt ist.

5. Verfahren zur quantitativen Unkenntlichmachung eines QR-Codes nach Anspruch 1, wobei die Unkenntlichmachung des Positionserkennungsmustermoduls (3) Unkenntlichmachung eines einzelnen Positionserkennungsmusters in einer oberen linken Ecke, Unkenntlichmachung eines einzelnen Positionserkennungsmusters in einer unteren linken Ecke, Unkenntlichmachung eines einzelnen Positionserkennungsmusters in einer oberen rechten Ecke und gleichzeitige Unkenntlichmachung von zwei oder drei der Positionserkennungsmuster beinhaltet; Unkenntlichmachung des Korrekturmustermoduls in Unkenntlichmachung eines einzelnen Korrekturmusters und gleichzeitige Unkenntlichmachung mehrerer Korrekturmuster gemäß der Anzahl von Korrekturmustern des QR-Codes unterteilt ist; Unkenntlichmachung des Positionierungsmustermoduls (4) in Unkenntlichmachung eines vertikalen Positionierungsmusters, Unkenntlichmachung eines horizontalen Positionierungsmusters und gleichzeitige Unkenntlichmachung von zwei Positionierungsmustern unterteilt ist; Unkenntlichmachung des Versionsinformationsmoduls in Unkenntlichmachung von Versionsinformationen in einer unteren linken Ecke, Unkenntlichmachung von Versionsinformationen in einer unteren rechten Ecke und Unkenntlichmachung von zwei Sätzen von Versionsinformationen unterteilt ist; und Unkenntlichmachung des Formatversionsmoduls in Unkenntlichmachung von Formatinformationen in einer unteren linken Ecke und einer oberen rechten Ecke and Unkenntlichmachung von Formatinformationen in der oberen linken Ecke unterteilt ist

6. Verfahren zur quantitativen Unkenntlichmachung eines QR-Codes nach Anspruch 1, wobei die Unkenntlichmachung verschiedener Module die tatsächlichen Unkenntlichmachungssituationen weitestmöglich simuliert und die verschiedenen Module in einer Weise unkenntlich gemacht werden, in der verschiedene Module in helle Module oder dunkle Module des Strichcodes kontaminiert werden.

## Revendications

1. Un procédé de défaçage quantitatif d'un code QR, **caractérisé en ce qu'**il comprend les étapes suivantes:
S1 : paramétrer une version d'un code QR à défacer et un niveau de correction d'erreurs, calculer le nombre de mots de code de données et le nombre de mots de code de correction d'erreurs du code-barres dans les conditions de la version actuelle et du niveau de correction d'erreurs actuel ;
S2 : paramétrer le type de caractères de codage du code QR à défacer, calculer le nombre maximum de caractères pouvant être codés à l'aide du type de caractères actuel, ce qui signifie que le nombre de bits de mots de code de données, après avoir ajouté les chiffres d'un indicateur de motif codé et les chiffres d'un indicateur de comptage de caractères, est plus petit que le nombre de chiffres d'un mot de code de données dans les conditions de la version actuelle et du niveau de correction actuel ; coder à l'aide du nombre maximum de caractères afin d'éviter l'existence de caractères de remplissage dans le mot de code de données ;
S3 : générer le code QR sous les conditions paramétrées, diviser en zones pour divers modules de motifs fonctionnels et coder les modules de zones, dans laquelle les modules incluent un mot de code de données (1) et un module de mot de code de correction d'erreurs (2), un module de limites de code-barres, un module de motif de détection de position (3), un module de motif de correction, un module de motif de positionnement (4), un module d'informations de version, et un module d'informations de format (5) ;
S4 : effectuer un défaçage quantitatif sur divers modules respectivement, dans laquelle le défaçage quantitatif inclut le défaçage de mot de code de correction d'erreurs, le défaçage de limites, le défaçage de motif de détection, le défaçage de motif de correction, le défaçage de motif de positionnement, le défaçage d'informations de version et le défaçage d'informations de format ;
le nombre de caractères utilisés pour le codage, dans les motifs incluant les motifs à chiffres, les motifs à lettres-chiffres, et les motifs à 8-octets, doit être égal au nombre de caractères correspondant à un mot de code de données spécifié par la version actuelle et le niveau de correction afin d'éviter une situation d'ajout de caractères de remplissage ;
le motif de codage du code QR Code est analysé ; le défaçage des données et mots de code de correction d'erreurs du code QR Code est quantifié ; les données 8 bits de chaque mots de code de données et de chaque mots de code de correction sont défacées de façon aléatoire ; et lorsqu'une erreur de lecture se produit pour l'une ou plus des données 8 bits, il est déterminé qu'une erreur de substitution s'est produite sur le mot de code de données actuel ou mot de code de correction d'erreur ;
le nombre d'erreurs de substitution du code QR actuel correspondant à la version actuelle et au niveau de correction est recherché afin de garantir que le degré de défaçage des mots de code de données et de correction d'erreurs n'excède pas la capacité du code QR à corriger des mots de code d'erreur ;
une option de défaçage d'impression de phase antérieure et une option de défaçage postérieur réel, dans lesquelles le défaçage d'impression de phase antérieure concerne l'opération de défaçage d'un code-barres lorsque le code-barres doté de la capacité anti-défaçage minimale est fabriqué puis le code-barres imprimé ; le défaçage postérieur réel concerne l'opération d'impression d'un code-barres doté de la capacité anti-défaçage minimale puis le défaçage d'une zone de module spécifique en contrôlant en stylo de griffonnage de façon manuelle ou par bras mécanique.

2. Un procédé de défaçage quantitatif d'un code QR selon la revendication 1, dans lequel le défaçage des mots de code de données et de correction d'erreurs n'inclut pas le défaçage des bits (6) restant du code QR.

3. Un procédé de défaçage quantitatif d'un code QR selon la revendication 1, dans lequel le taux de défaçage des mots de code de données et de correction d'erreurs du code QR actuel est égal au produit du module de mot de code défacé/(le nombre de mots de correction de données + le nombre de mots de code de correction) ^{∗} 100%.

4. Un procédé de défaçage quantitatif d'un code QR selon la revendication 1, dans lequel les zones vides (7) du module de limites de code-barres correspondent respectivement à 0, 1, 2, 3, 4 unité(s) de largeurs de module, et le défaçage du module de limites de code-barres est divisé en un total de 5 niveaux.

5. Un procédé de défaçage quantitatif d'un code QR selon la revendication 1, dans lequel le défaçage du module de motif de détection de position (3) inclut le défaçage d'un motif de détection de position simple dans le coin haut gauche, le défaçage d'un motif de détection de position simple dans le coin bas gauche, le défaçage d'un motif de détection de position simple dans le coin haut droit, et le défaçage simultané de deux ou trois motifs de détection de position ; le défaçage du module de motif de correction est classé comme défaçage d'un motif de correction simple et défaçage simultané de multiples motifs de correction en fonction du nombre de motifs de correction du code QR ; le défaçage du module de motif de positionnement (4) est classé comme défaçage d'un motif de positionnement vertical, défaçage d'un motif de positionnement horizontal, et défaçage simultané de deux motifs de positionnement ; le défaçage du module d'informations de version est classé comme défaçage d'informations de version dans le coin bas gauche, défaçage d'informations de version dans le coin bas droit, et défaçage de deux éléments d'informations de version ; et le défaçage du module de version de format est classé comme défaçage d'informations de format au coin bas gauche et au coin haut droit, et défaçage d'informations de format au coin haut gauche.

6. Un procédé de défaçage quantitatif d'un code QR selon la revendication 1, dans lequel le défaçage de divers modules simule les situations de défaçage réel dans toute la mesure du possible, et les divers modules sont défacés de façon à contaminer entièrement divers modules en modules clairs ou modules sombres du code-barres.
